(19) Europäisches Patentamt
European Patent Office
Office européen des brevets

(11) EP 3 809 341 A1

(12) EUROPEAN PATENT APPLICATION

(43) Date of publication:
21.04.2021 Bulletin 2021/16

(51) Int Cl.:
$G06N\ 20/20^{(2019.01)}$

(21) Application number: 19204195.2

(22) Date of filing: 18.10.2019

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME
KH MA MD TN

(71) Applicant: FUJITSU LIMITED
Kanagawa 211-8588 (JP)

(72) Inventors:
• INAKOSHI, Hiroya
London, NW8 9BJ (GB)

• SAN MIGUEL GONZÁLEZ, Beatriz
28029 Madrid (ES)
• NASEER BUTT, Aisha
Middlesex, UB4 8LB (GB)

(74) Representative: Haseltine Lake Kempner LLP
138 Cheapside
London EC2V 6BJ (GB)

Remarks:
Amended claims in accordance with Rule 137(2) EPC.

(54) INFERENCE VERIFICATION OF MACHINE LEARNING ALGORITHMS

(57) In an inference verification method for verifying a trained first machine learning algorithm, a set of data samples are input to each of a plurality of at least three different trained machine learning algorithms and a set of outcomes are obtained from each algorithm. The plurality of trained machine learning algorithms are the same as the algorithm to be verified except that each of the plurality has been trained using training data samples where at least some of the outcomes are different as compared to training data samples used to train the first algorithm. For each sample in the data set input to the plurality, the method further comprises determining whether all of the outcomes from the plurality are the same. When all of the outcomes from the plurality are the same, the first algorithm is reported as being potentially defective for that sample in the input data set.

Figure 1A

Printed by Jouve, 75001 PARIS (FR)

**Description**

Embodiments relate to inference verification of machine learning algorithms.

In the early 2000s, Deep Learning algorithms began to outperform humans on image recognition tasks. Since this technological breakthrough, machine learning algorithms have been applied to a variety of problems, including in the form of autonomous intelligence systems (AIS). However, as use of machine learning (ML) has become more widespread and its potential impact on society has grown, people have become aware that ML algorithms must be accountable. An accountable ML algorithm should audit, minimize and report negative impacts, show trade-offs, and redress by design. However, it is unclear how this may be achieved in every application.

A typical issue is about fairness. As algorithms have been expanded to critical decision-making applications, for example relating to recidivism, bail decision, medical care, promoting/hiring, and stopping-and-frisking, many incidents regarding data bias have been reported. A decision made by a machine algorithm used to be considered to be fair because a machine is free from a sense of values, but if the training data used to create the algorithm is biased due to unfairness in society, an AIS will model the bias and its outcomes also become unfair. Fortunately, "fairness" is mathematically formalized and there are many proposals as to how to train an AIS so that it returns outcomes constrained to be fair. This is a typical "by-design" approach, in the sense that they succeeded in designing fairness by mathematics. However, there may be unanticipated issues with AIS that have major, unforeseen impacts and for which a "by-design" approach is inappropriate.

ML algorithms become complex as they outperform human experts. Since it is believed that human experts should be the final decision maker in critical applications, the black-box model or its output must be interpretable by a human. However, it is not clear whether human beings are able to properly understand the way in which modern AIS infer outcomes.

As advanced AI models are not easy for humans to understand, a current target of AI research is to provide a means for explaining why an AI returned a particular outcome for a given input, instead of explaining the model itself. This is termed Explainable Artificial Intelligence (XAI). Another direction is deconvolution methods that visualize which parts of images contribute to outcomes. Although they are helpful for experts to see if an AI works as expected, these approaches merely evaluate the contributions to the outcome and this is quite different from the way humans make inferences. Causal modelling is much nearer to human inference, but has yet to be established because of computational difficulties. Counterfactual explanation is also more intuitive for humans because they often consider a counterfactual situation in order to understand a factual situation, but a counterfactual explanation itself must also be assessed for trustworth iness.

According to an embodiment of a first aspect there is provided an inference verification method for verifying (e.g. testing or investigating the veracity of the outcomes of) a trained machine learning algorithm. The method comprises inputting a set of data samples to each of a plurality of at least three trained further machine learning algorithms and obtaining a set of outcomes from each algorithm, where the plurality of trained further machine learning algorithms differ from each other but are similar (almost identical) to the first machine learning algorithm (i.e. the algorithm to be verified) except that each of the trained further machine learning algorithms has been trained using training data samples where at least some of the outcomes are different as compared to training data samples used to train the first machine learning algorithm. The method further comprises, for each sample in the data set input to the plurality of trained further machine learning algorithms, determining whether all of the outcomes from the plurality of trained further machine learning algorithms are the same. When all of the outcomes from the plurality of trained further machine learning algorithms are the same, the first machine learning algorithm may be reported as being potentially defective for that sample in the input data set. When not all of the outcomes from the plurality of trained further machine learning algorithms are the same, the first machine learning algorithm may be reported as being non-defective for that sample in the input data set.

Embodiments may employ what is termed here as "adversarial accountability" to assess if a machine learning algorithm, such as an AIS, is trustworthy. An algorithm is said to have adversarial accountability if it shows discrepancy with its counterparts who are the agents trained in a quasi-opposite way, i.e. models trained similarly but partly oppositely to a given trained model (for example, the trained model and its counterparts may share parameters or hyperparameters, but have been trained with partially flipped labels). The assumption is that, even if humans are not ever able to understand the way a machine learning algorithm, such as an AIS, infers, they may trust the decisions made by the algorithm as long as the algorithm does things, at least slightly, better than a human at a single task. Embodiments employing adversarial accountability may detect potentially biased properties of the algorithm by comparing the explanations of the algorithm and its counterparts. In some embodiments a "challenge" (a question or explanation that critically differentiates an outcome of the algorithm) is posed to assist a human expert in making a final decision.

The plurality of different trained machine learning algorithms may be obtained by: creating a plurality of copies of the trained first machine learning algorithm, the trained first machine learning algorithm having been trained on a first set of training data samples; and retraining each copy algorithm using respective sets of training data samples derived from the first set, each of the derived sets differing from each other, and differing from the first set in that labels attached to at least some features in the derived set are opposite to labels attached to those features in the first set.

When all of the outcomes from the plurality of trained machine learning algorithms are the same for the sample of data, a method according to an embodiment may further comprise: for each feature of the sample, assessing the overall contribution made by the feature to the outcomes obtained from all the trained machine learning algorithms of the plurality; on the basis of the assessment, determining at least one feature of the sample which made more overall contribution to the outcomes than the other features; and reporting the at least one feature.

When not all of the outcomes from the plurality of trained machine learning algorithms are the same for the sample of data, a method according to an embodiment may further comprise: determining which of the plurality of trained machine learning algorithms provided an outcome which is a majority outcome and which of the plurality of trained machine learning algorithms provided an outcome which is a minority outcome; for each feature of the sample, assessing the difference between the overall contribution made by the feature in each trained machine learning algorithm which provided the majority outcome and the overall contribution made by the feature in each trained machine learning algorithm which provided the minority outcome; and determining which of the differences is the largest and reporting the feature corresponding to the largest difference.

In each of the above cases, the method may further comprise determining whether the reported feature has a preassigned special status and, if so, reporting that determination result. The preassigned special status may indicate, for example, that the feature may be associated with at least one of: susceptibility to undue bias, higher than average likelihood of false outcomes, higher than average likelihood of erroneous input values.

Embodiments analyse the counterparts, and, in particular, the decisions and features that most contribute to them. In particular, an embodiment may contribute to identifying unfair AI systems, for example by being aware of bias in decisions that may have a negative impact for some groups (of, for example, people, animals, objects, etc.) defined by a set of protected classes. A protected class, also known as a sensitive attribute, is a feature that should be protected from unfair outcomes (such as but not limited to gender, age, and religion for people, breed for animals, shape or size preference for engineering items such as nuts and bolts, etc.). The goal may be to be fair in terms of those classes. An example fairness is known as PPV (positive predictive value), where decisions should be made so that PPV is equal in every protected class.

In an inference verification method embodying the first aspect the trained first machine learning algorithm may, for example, be an autonomous information system.

For example, embodiments may be applied to any decision-making and/or decision support application in any sector, especially but not exclusively where algorithmic fairness plays a part. For example, embodiments may be applied in the engineering, manufacturing (for example, automotive), insurance, healthcare, finance, police, legal and private sectors, and/or for applications relating to recidivism, bail decision, medical care, promoting/hiring, or stopping-and-frisking.

According to an embodiment of a second aspect there is provided a computer program which, when run on a computer, causes that computer to carry out a method embodying the first aspect.

According to an embodiment of a third aspect there is provided a non-transitory storage medium storing instructions to cause a computer to perform a method embodying the first aspect.

According to an embodiment of a fourth aspect there is provided inference verification apparatus for verifying a trained first machine learning algorithm. The apparatus comprises: at least one memory to store a plurality of at least three different trained machine learning algorithms, where the plurality of trained machine learning algorithms are identical to a trained first machine learning algorithm to be verified except that each of the trained machine learning algorithms of the plurality has been trained using training data samples where at least some of the outcomes are different as compared to training data samples used to train the first machine learning algorithm; at least one processor to receive a set of data samples, run the set of data samples on each of the plurality of different trained machine learning algorithms, and obtain a set of outcomes from each algorithm in response to the data samples; and an outcome determiner to determine, for each sample in the data set input to the plurality of trained machine learning algorithms, whether all of the outcomes from the plurality of trained machine learning algorithms are the same. When all of the outcomes from the plurality of trained machine learning algorithms are the same, the outcome determiner reports the trained first machine learning algorithm as being potentially defective for that sample in the input data set, and when not all of the outcomes from the plurality of trained machine learning algorithms are the same, the outcome determiner reports the trained first machine learning algorithm as being non-defective for that sample in the input data set.

Reference will now be made, by way of example, to the accompanying drawings, in which:

    Figure 1A is a flowchart of a method according to an embodiment;
    Figure 1B is a flowchart of a method according to an embodiment; Figure 2 is a black diagram of apparatus according to an embodiment;
    Figure 3 is a block diagram of an AIS adversarial accountability system according to an embodiment;
Figure 4 is a flowchart of a method carried out by the system of Figure 3;
Figure 5A is data table showing categorisation of copies of an AIS for some data samples according to decision, and Figure 5B is a graph illustrating the percentage difference in decisions made by the AIS copies;
Figure 6A is a list of features in first input data and their values, and Figure 6B is a list of the features ordered according to a ranking system;
Figure 7A is a list of features in second input data and their values, Figure 7B is a graph illustrating outcomes from three models in respect of the second input data, and Figure 7C is a list of the features ordered according to another ranking system; and
Figure 8 is a block diagram of a computing device suitable for carrying out a method of an embodiment.

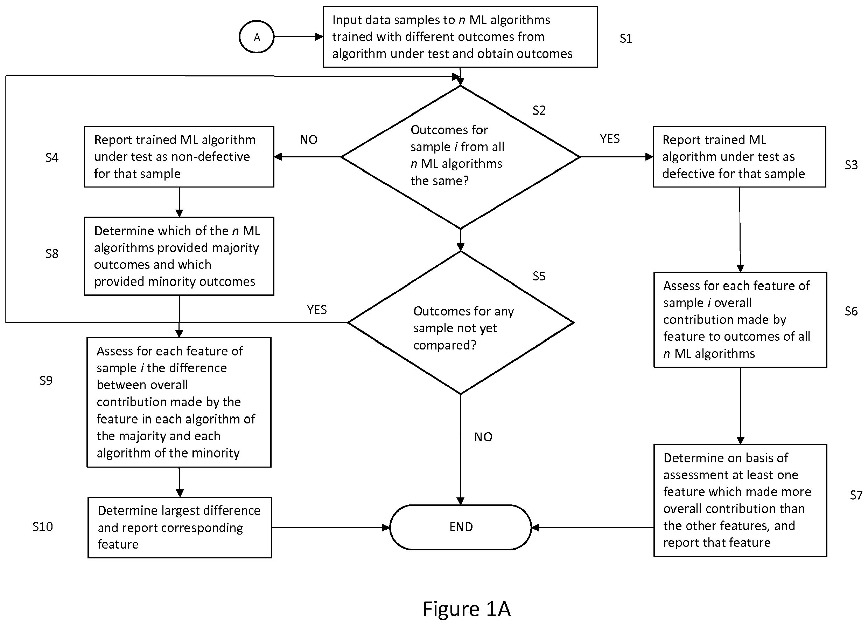

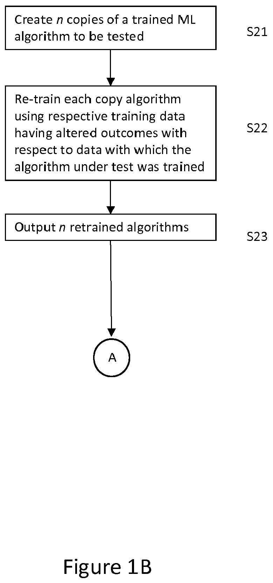

Figure 1A is a flowchart of an inference verification method for verifying a trained machine learning algorithm, for example an autonomous information system, according to an embodiment. At step S1 a set of data samples is input to each of a plurality of $n$ different trained machine learning algorithms and a set of outcomes is obtained from each algorithm. The number n of algorithms in the plurality is at least three, but an optimal number of algorithms may be predetermined. The plurality of trained machine learning algorithms are identical to the trained machine learning algorithm to be verified except that each of the trained machine learning algorithms of the plurality has been trained using training data samples where at least some of the outcomes are different as compared to training data samples used to train the machine learning algorithm to be verified (the algorithm under test). This will be explained in more detail below with reference to Figure 1B.

In step S2, for each sample in the data set input to the plurality of trained machine learning algorithms, it is determined whether all of the outcomes from the plurality of trained machine learning algorithms are the same. If all of the outcomes from the plurality of trained machine learning algorithms are the same (S2: YES), in step S3 the trained machine learning algorithm to be verified is reported as being potentially defective for that sample in the input data set. Alternatively, if not all of the outcomes from the plurality of trained machine learning algorithms are the same (S2: NO), in step S4 the trained machine learning algorithm to be verified is reported as being non-defective for that sample in the input data set. If it is found in step S5 that there are still samples for which the outcomes have not yet been compared in step S2, then step S2 and following steps are repeated.

When all of the outcomes from the plurality of trained machine learning algorithms are the same for the sample of data, the method of Figure 1A may further comprise step S6 in which, for each feature of the sample, the overall contribution made by the feature to the outcomes obtained from all the trained machine learning algorithms of the plurality is assessed. In step S7, on the basis of the assessment, at least one feature of the sample which made more overall contribution to the outcomes than the other features is determined and reported.

When not all of the outcomes from the plurality of trained machine learning algorithms are the same for the sample of data, the method of Figure 1A may further comprise step S8 in which it is determined which of the plurality of trained machine learning algorithms provided an outcome which is a majority outcome and which of the plurality of trained machine learning algorithms provided an outcome which is a minority outcome. In step S9, for each feature of the sample, the difference between the overall contribution made by the feature in each trained machine learning algorithm which provided the majority outcome and the overall contribution made by the feature in each trained machine learning algorithm which provided the minority outcome is assessed. In step S10 the difference which is the largest is determined and reported.

The method may further comprise determining whether the feature reported in either step S7 or S10 has a preassigned special status. If so, that determination result is also reported. The preassigned special status may indicate that the feature may be associated with at least one of: susceptibility to undue bias, higher than average likelihood of false outcomes, higher than average likelihood of erroneous input values.

Figure 1B shows a flowchart of a process for obtaining the plurality of different trained machine learning algorithms for use in step S1 of Figure 1A. In step S21 a plurality of $n$ ($\geq 3$) copies of the trained machine learning algorithm to be verified are created. The trained machine learning algorithm to be verified has been trained on a first set of training data samples. In step S22 each copy algorithm is re-trained using respective sets of training data samples derived from the first set, each of the derived sets differing from each other, and differing from the first set in that labels attached to at least some features in the derived set are opposite to labels attached to those features in the first set. The n re-trained algorithms are output at step S23.

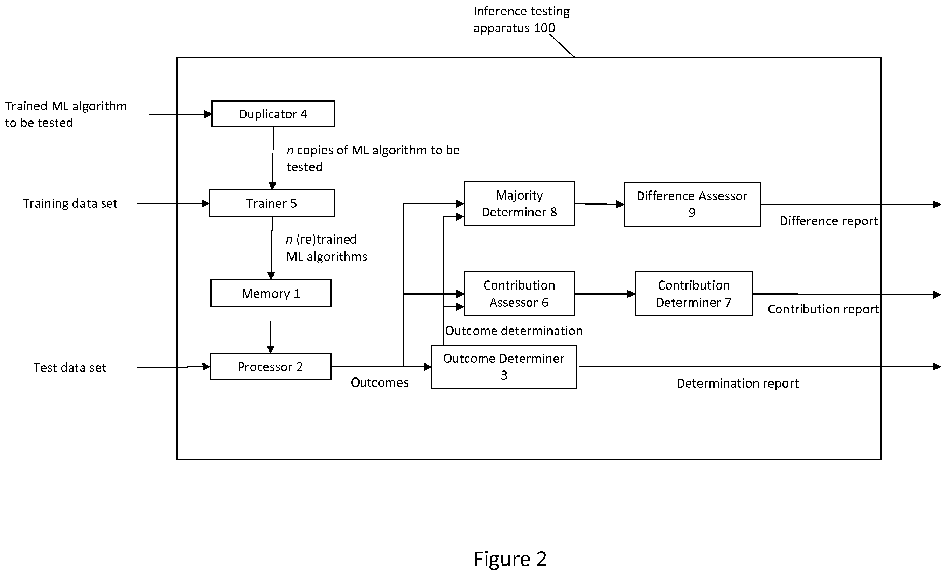

The method of Figure 1A may be carried out by the inference verification apparatus 100 depicted in Figure 2. The apparatus 100 comprises a memory 1, a processor 2, an outcome determiner 3, a duplicator 4, a trainer 5, a contribution assessor 6, a contribution determiner 7, a majority determiner 8 and a difference assessor 9. Memory 1 is configured to store the plurality of at least three different trained machine learning algorithms. The processor 2 is configured to receive the set of data samples, run the set of data samples on each of the plurality of different trained machine learning algorithms, and obtain a set of outcomes from each algorithm in response to the data samples. The outcome determiner 3 is configured to determine, for each sample in the data set input to the plurality of trained machine learning algorithms, whether all of the outcomes from the plurality of trained machine learning algorithms are the same and issue a determination report. When all of the outcomes from the plurality of trained machine learning algorithms are the same, the outcome determiner 3 reports the trained machine learning algorithm to be verified as being potentially defective for that sample in the input data set. When not all of the outcomes from the plurality of trained machine learning algorithms are the same, the outcome determiner 3 reports the trained machine learning algorithm to be verified as being non-defective for that sample in the input data set.

Duplicator 4 is configured to create a plurality of copies of the trained machine learning algorithm to be verified, where the trained machine learning algorithm to be verified has been trained on a first set of training data samples. Trainer 5 is configured to re-train each copy algorithm using respective sets of training data samples derived from the first set, each of the derived sets differing from each other, and differing from the first set in that labels attached to at least some features in the derived set are opposite to labels attached to those features in the first set.

Contribution assessor 6 is configured to assess, when all of the outcomes from the plurality of trained machine learning algorithms are the same for the sample of data, the overall contribution made by the feature to the outcomes obtained from all the trained machine learning algorithms of the plurality, for each feature of the sample. Contribution determiner 7 is configured to then determine, on the basis of the assessment, at least one feature of the sample which made more overall contribution to the outcomes than the other features and report the at least one feature.

Majority determiner 8 is configured to determine, when not all of the outcomes from the plurality of trained machine learning algorithms are the same for the sample of data, which of the plurality of trained machine learning algorithms provided an outcome which is a majority outcome and which of the plurality of trained machine learning algorithms provided an outcome which is a minority outcome. Difference assessor 9 is configured to determine, for each feature of the sample, the difference between the overall contribution made by the feature in each trained machine learning algorithm which provided the majority outcome and the overall contribution made by the feature in each trained machine learning algorithm which provided the minority outcome. Difference assessor 9 further determines which of the differences is the largest and reports the feature corresponding to the largest difference.

Contribution determiner 7 or difference assessor 9, or another component of apparatus 100, may also determine whether the reported feature has a preassigned special status (as discussed above) and, if so, report that determination result.

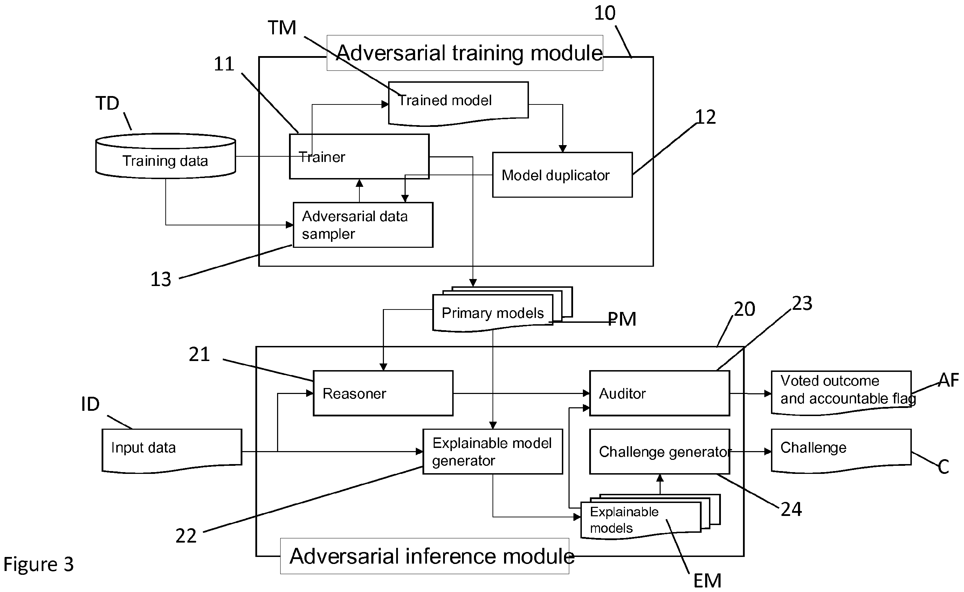

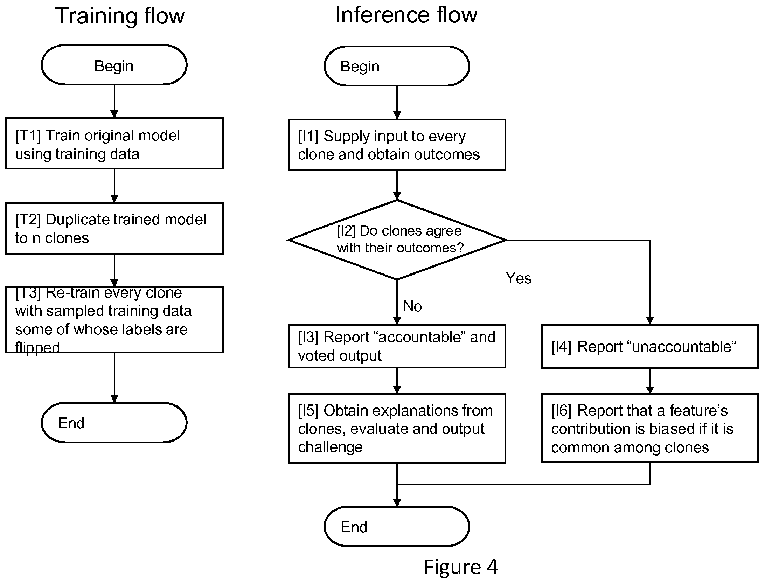

Another embodiment will now be discussed with reference to Figures 3 and 4. Figure 3 depicts a block diagram of an AIS adversarial accountability system according to an embodiment, and Figure 4 is a flow chart illustrating the method carried out by the system of Figure 3. The system comprises an adversarial training module 10 and an adversarial inference module 20. The adversarial training module is supplied with training data TD and includes a model trainer 11 which is configured to output a trained model TM on the basis of the training data TD (step T1 of the training stage). This is the baseline model that is to be tested for accountability. In a supervised learning setting the training data TD may be a collection of records each comprised of feature values and labels, and the trained model TM may be the output of an arbitrary supervised machine learning algorithm trained with the training data TD.

The adversarial training module 10 also comprises a model duplicator 12 and an adversarial data sampler 13. The adversarial inference module 20 comprises a reasoner 21, an explainable model generator 22, an auditor 23 and a challenge generator 24.

The model duplicator 12 is configured to copy the trained model TM to obtain n copies (clones) (step T2 of the training stage). The adversarial data sampler 13 is configured to generate n sets of data by sampling the training data TD and flipping (i.e. changing the value to the opposite value, e.g. changing 1 to 0 and vice versa) some labels. The model trainer 11 is then run to re-train each of the $n$ clones using the respective $n$ generated data sets to obtain n primary models PM (step T3 of the training stage). That is, the clones are re-trained as "adversarial counterparts", i.e. so that they intentionally return different outcomes for some features of the same input data. Although some of them intentionally provide opposite outcomes, the adversarial counterparts are equally accurate. This discrepancy between adversarial counterparts may be considered to emulate how trust is given to an agent (either a person or an AI-based system) which considers all possibilities when reaching a conclusion.

The n primary models PM are supplied to the reasoner 21 of the adversarial inference module 20 along with input data ID. The input data ID is an unseen data set comprised of feature values. The reasoner 21 is configured to determine the outcomes for each item of input data ID from each primary model PM (step 11 of the inference stage).

The auditor 23 is configured to collect the outcomes from the primary models PM for the input data ID and to report the voted outcome. It also returns an account flag AF indicating whether the AIS is "unaccountable" or "accountable", i.e. if the outcomes are not common/not the same the baseline model TM is confirmed to be accountable on the input data ID. This is because the clones were trained with the intention of producing conflicting outcomes and the fact that the outcomes for an unseen input data actually conflict shows that the clones took equal account of all features of the input data when reaching a conclusion. Thus (at step 13 of the inference stage), the AIS is reported as "accountable" and the system takes a majority vote on the outcomes. In this case the clones having the final outcome are termed the majority and the others as minority.

If the auditor 23 determines that the outcomes do not conflict (step 12 of the inference stage = yes), it is not possible to confirm that the baseline model TM is accountable on the input data ID and the auditor 23 reports the baseline model TM as "unaccountable" (step 14 of the inference stage).

The input data ID and primary models PM are also supplied to the explainable model generator 22 and used to generate an explainable model EM corresponding to each primary model PM. If the auditor 23 reports that the AIS is "accountable", the challenge generator 24 generates a "challenge" C (step 15 of the inference stage) using the explainable models EM, as discussed below.

An explainable model EM is a separate model associated with a primary model, which is either a baseline model or a clone. For example, if the primary model is denoted as $y = f(x)$, its explainable model may be denoted as:

$$f(x) = g(x') = \varphi_0 + \sum \varphi_i x'_i$$

where $x'$ is the simplified input $x$ and $\varphi_i$ is the contribution to outcome from $x_i$. Note that the sum is taken from $i=1$ to $m$ where m is the number of features. When the outcomes of the primary model conflict (step I2=no), the difference $|\varphi^p_i - \varphi^n_i|$, where $\varphi^p_i$ is the contribution from the $i$ th feature by the majority and $\varphi^n_i$ is the contribution from the i th feature by the minority, is considered. The $i$ th feature with maximal $|\varphi^p_i - \varphi^n_i|$ is called a *challenge* in this application, because the higher it is, the most it discriminates the outcome. Other expressions could be used to determine the challenge, such as the ratio $\varphi^p_i / \varphi^n_i$ that indicates the relation between the majority and minority.

If the auditor 23 determines that the outcomes do not conflict (step I2=yes), it is the contribution from each feature which is then considered and reported by the auditor 23 (step 16 of the inference stage). If all the explainable models agree on the contribution from the $i$ th feature, meaning that they each report that the same $i$ is maximizing $\varphi_i$, the auditor 23 reports that the outcome may be biased because the clones similarly explain the outcome despite having been re-trained differently.

Worked Example

Suppose that there are $N$ records of $m$ features with a binary label comprising training data $D$:

$$D = \{(x^j, y^j) \mid i=1,...,N\}$$

where $x^j \square R^m$, and $y^j \square \{0,1\}$.

The superscript $j$ could be omitted as long as it is not confusing. Supposing a machine learning algorithm $A$, the model trained by $A$ with training set $D$ may be denoted as $A(D)$.

Let A(D) be a perceptron. The trained model is denoted as

$$A: D \rightarrow f(x) = \theta(w^T x)$$

where $x$ is an extended $(m+1)$ dimensional vector with $x_0 = 1$. $w \in R^{(m+1)}$ and $\theta$ are weights and a non-linearity, respectively. It has a hyperparameter $\theta$ and a parameter $w$.

Another example model could be an additive model such as

$$A: D \rightarrow f(x) = \sum w_i g_i(x)$$

where $w_i \in R$ and $g_i \in H$. The sum is taken for $i=0,....$ $H$ is a class of non-linearity such as decision trees. It has a hyperparameter $H$ and parameters $(w_i)_{i=1,...,m}$.

To clone the original model $f$, either hyperparameters, or both hyperparameters and parameters, may be copied. When a family of neural networks is used, copying both is useful because fine-tuning is a popular technique. However, copying only hyperparameters may be a good option for additive models such as random forest or boosting.

To train clones with sampled training data, one design choice is to follow the steps:

1. copy the training data $D$ to $D'$, whose labels are flipped as $D'=\{(x,\sim y) \mid \forall(x,y) \in D\}$,
2. split $D$ into $n$ segments, $S^{(1)}, ..., S^{(n)}$, similarly obtain $S'^{(1)}, ..., S'^{(n)}$ from $D'$,
3. train $f^{(1)} = A(\{S'^{(1)} \cup S^{(2)} \cup ... \cup S^{(n)}\}), ..., f^{(k)} = A(\{S^{(1)} \cup ... \cup S^{(k-1)} \cup S'^{(k)} \cup S^{(k+1)} \cup ... \cup S^{(n)}\}), ..., f^{(n)} = A(\{S^{(1)} \cup ... \cup S^{(n-1)} \cup S'^{(n)}\})$,

where $f^{(k)}$ for $k=1,...,n$ denote n clones.

Another design choice could be:

1. copy the training data $D$ to $D'$, whose labels are flipped as $D'=\{(x,\sim y) \mid \forall(x,y) \in D\}$,
2. split $D$ into s segments (or folds), $S^{(1)}, ..., S^{(s)}$, similarly obtain $S'^{(1)}, ..., S'^{(s)}$ from D',
3. train $f^{(k)} = A(\cup \sigma^{(k,t)})$ where the union is taken over $t=1,...,s$ and $\sigma(k,t)$ is a sampling function returning either $S(k)$ or $S'(k)$.

The first design option is a special case of the second. It is easy to see that letting $s=n$ and $\sigma(k,t)$ be $S'(k)$ if $(k+t)/n = 0$, $S(k)$ otherwise in the second design choice results in the first design choice except the indices of $f(k)$. The reason for introducing the second design choice will become clearer later on.

In the inference phase with an unseen input data x, outcomes $y^{(k)} = f^{(k)}(x)$ are obtained for $k=1,...,n$. If $f^{(k)}(x) \neq f^{(k')}(x)$ for $\exists k, k'$ such that $k \neq k'$, "accountable" is reported. And output $f^{(k)}(x)$ if $\sum f^{(k)}(x) > \sum (\neg f^{(k)}(x))$). Otherwise, "unaccountable" is reported.

When the system is accountable, a challenge may be calculated and is obtained as explained in the previous section. Formally, let $\varphi^{(k)}_i$ denote the contribution from the i th feature by the k th clone. The challenge is the feature index i that maximizes $|\varphi^{(k)}_i - \varphi^{(k')}_i|$. The i th feature is reported if $f^{(k)}(x) = f^{(k')}(x)$ for $\forall k, k'$ such that $k \neq k'$, where k is a clone model of the majority vote and k' is a clone model of the minority vote.

An example will now be described using the dataset German Credit Data (UCI Machine Learning Repository: Statlog (German Credit Data) Data Set https://archive.ics.uci.edu/ml/datasets/statlog+(german+credit+data)) with $n=s=3$ and the fold sampling, which is $(k,t)$ such that it is $S'(k)$ if $(k+t)/n = 0$, $S(k)$ otherwise, since this is one of the simplest configurations.

The German Credit dataset identifies people/applicants described by a set of features as a good or a bad credit risk. A good credit risk means that the applicant will be able to repay the loan (outcome 1), and a bad credit risk the opposite (outcome 0).

The original dataset has a shape of (1000, 21), i.e. 1000 samples and 21 features, including the classification label/target.

Categorical variables are transformed into one hot encoding, and moreover, a "Gender" variable is created to identify the gender of the applicant, using the variable *statussex* of the dataset as shown in the table below.

**Attribute 9: Personal status and sex**

- A91 : male : divorced/separated
- A92 : female : divorced/separated/married
- A93 : male : single
- A94 : male : married/widowed
- A95 : female : single

This results in a final dataset with shape (1000, 64).

The most relevant variables are:

- age: age of the applicant. This could be considered to be a protected class.
- gender: gender of the applicant: female or male. This could be considered to be a protected class.
- foreign worker: yes or no. This could be considered to be a protected class.
- classification: target of the model: 0 = 'bad' and 1 = 'good'

**Baseline model**

To create a baseline model, the dataset is divided into 2 parts: D_train (to train the model - 90% of the dataset) and D_test (to evaluate the model - 10% of the dataset). A XGBoost model is considered.

**Clone Models**

Using the previous parameters, a set of clone models are created (3 for the example) with sampled training data whose labels are partially flipped.

In particular, the D_train dataset is used to create 3 new datasets. The process to create each dataset will be:

1. Randomly split D_train into 3 parts
2. For each part:

   a. Flip the target (0→1)
   b. Add flipped part to the two others parts

This new datasets will be used to create the 3 clone models.

One of the simplest configurations is that having $n=s=3$ with fold sampling. It is easy to see that, as $n$ gets larger, the noise injected into training datasets becomes smaller, however the framework becomes less accountable because there will always be at least one disagreeing counterpart. By letting n≠s and by using a random sampler, where $\sigma(k,t)$ is either $S'(k)$ or $S(k)$ with probability $r$ or $1-r$, respectively, the total framework may be made as accountable as required, by having large n while reducing the injected noise by having small $r$. Note that $0 < r < 1$.

**Inference Stage**

For the inference flow, it will be assumed that the 3 clone models receive new input data and this will allow bias in specific samples to be identified.

D_test will be the new input data for the clone models given that it is not used before in the training the models.

As in step 12 in Figure 4, the classification of the samples for each clone model is obtained. This will allow it be determined whether the system is accountable or unaccountable for each sample.

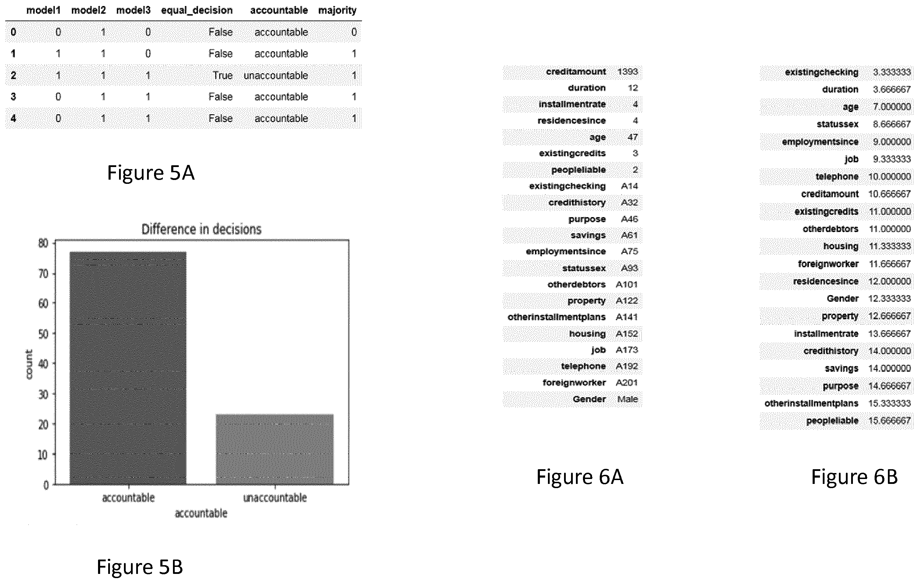

For example, considering the 5 first samples of the D_test dataset, the information shown in the table of Figure 5A will be obtained.

This table shows that the row numbered 2 obtains the same decision for each clone model, and thus it is not possible to confirm the system as accountable for that sample (i.e. it is "unaccountable"). Conversely, the remaining rows show that the other clone models have different decisions, and thus the system is accountable for the corresponding samples.

The graph of Figure 5B depicts the distribution of accountable (equal_decision = False) and unaccountable (equal_decision=True) samples of the D_test.

## Unaccountable Example

When the system is considered unaccountable for a data sample of the input data D_test, the next step is to consider what features in the sample contribute more to the decision and if any of these features are considered to be a protected class. If a feature which is a protected class is one of those that contributed more, then bias is suspected. Human experts should therefore be careful of having protected classes with high contributions in unaccountable samples.

For example, considering the data shown in the table of Figure 6A for another loan applicant (sample as input for the three clone models), this indicates that a 47-year-old single man, who is asking for a loan of 1393 Euros to repay in 12 months, is a foreign worker, and a skilled employee / official.

In this case the three clone models agree that the output is 1 (same as the label in the D_test). As shown in the table of Figure 6B, if the average ranks of the contribution of the features are evaluated as described above, the most relevant features are existing checking account and duration, but also some protected classes such as age and status sex. The rank is in increasing order of contribution, i.e. the higher the rank is, the more it contributes (the values in the table are the median of the numerical data ranks of the SHAP values of the models, SHAP values representing the feature's responsibility or relevance for the model output).

## Accountable Example

When the system is considered accountable for a data sample of the input data D_test,, a challenge will be calculated to evaluate if it is coherent with the outcome, so human experts may take this information into account to determine if a sample has bias.

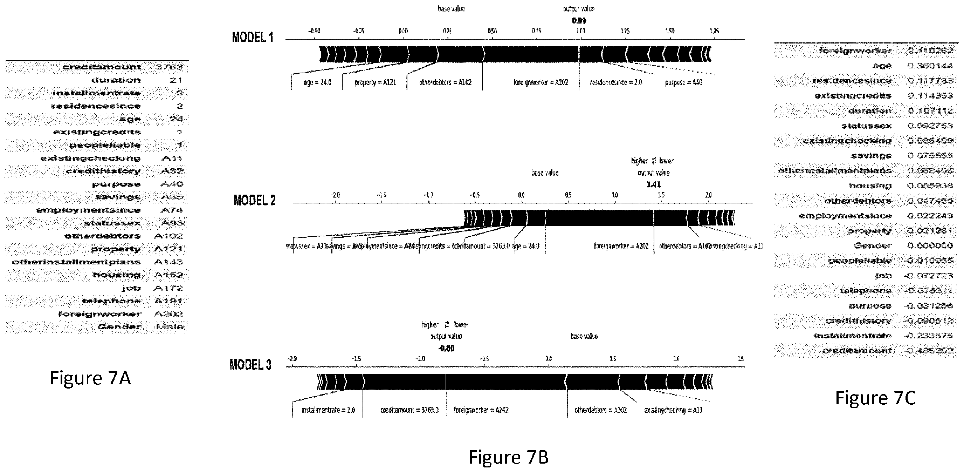

Considering the data shown in the table of Figure 7A for another applicant, this indicates that a single man who is not a foreign worker is asking for a loan of 3763 Euros to repay in 21 months.

Two models return 1 (good to give credit) and one model as 0 (bad). The label in D_test is 1.

As shown in the table of Figure 7B, the feature foreignworker = A202 (meaning that the applicant is not a foreign worker) contributes with high importance to output 1 in models 1 and 2, while for model 3 the foreignworker feature contributes with low importance to output 0.

The table of Figure 7C indicates the contribution differences $|\varphi^{(k)}_i - \varphi^{(k)}_i|$ between the majority outcomes and the minority outcomes for each feature. Given that the highest difference values are those related to the features foreignworker and age (which may both be considered to be protected classes), a challenge is reported for those features so that human experts may consider whether the sample has bias.

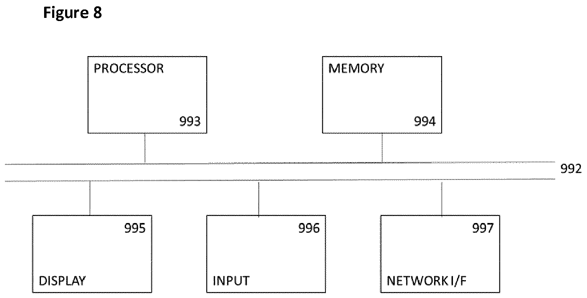

Figure 8 is a block diagram of a computing device, such as a data storage server, which embodies the present invention, and which may be used to implement some or all of the steps of a method of an embodiment, and perform some or all of the tasks of apparatus of an embodiment. For example, the computing device of Figure 8 may be used to implement all, or only some, of steps S1 to S10 of the method illustrated in Figure 1A, and to perform some or all of the tasks of the memory 1, processor 2, outcome determiner 3, duplicator 4, trainer 5, contribution assessor 6, contribution determiner 7, majority determiner 8 and difference assessor 9 illustrated in Figure 2, and/or to implement all, or only some, of steps T1 to 16 of the method illustrated in Figure 4, and to perform some or all of the tasks of the trainer 11, model duplicator 12, adversarial data sampler 13, reasoner 21, explainable model generator 22, auditor 23 and challenge generator 24 of the adversarial training module 10 or adversarial inference module 20 illustrated in Figure 3.

The computing device comprises a processor 993, and memory, 994. Optionally, the computing device also includes a network interface 997 for communication with other such computing devices, for example with other computing devices of invention embodiments.

For example, an embodiment may be composed of a network of such computing devices. Optionally, the computing device also includes one or more input mechanisms such as keyboard and mouse 996 and a display unit such as one or more monitors 995. The components are connectable to one another via a bus 992.

The memory 994 (which may serve as memory 1) may include a computer readable medium, which term may refer to a single medium or multiple media (e.g., a centralized or distributed database and/or associated caches and servers) configured to carry computer-executable instructions or have data structures stored thereon, such as training data TD, input data ID, trained model TM, primary models PM, explainable models EM, outcomes and flags AF, and/or challenges C. Computer-executable instructions may include, for example, instructions and data accessible by and causing a general purpose computer, special purpose computer, or special purpose processing device (e.g., one or more processors) to perform one or more functions or operations such as all or parts of the methods described with reference to Figure 1A, Figure 1B or Figure 4. Thus, the term "computer-readable storage medium" may also include any medium that is capable of storing, encoding or carrying a set of instructions for execution by the machine and that cause the machine to perform any one or more of the methods of the present disclosure. The term "computer-readable storage medium" may accordingly be taken to include, but not be limited to, solid-state memories, optical media and magnetic media. By way of example, and not limitation, such computer-readable media may include non-transitory computer-readable storage media, including Random Access Memory (RAM), Read-Only Memory (ROM), Electrically Erasable Programmable Read-Only Memory (EEPROM), Compact Disc Read-Only Memory (CD-ROM) or other optical disk storage, magnetic disk storage or other magnetic storage devices, flash memory devices (e.g., solid state memory devices).

The processor 993 (which may serve as processor 2) is configured to control the computing device and execute processing operations, for example executing computer program code stored in the memory 994 to implement some or all of the methods described with reference to Figures 1A, 1B and/or 4 and defined in the claims. For example, processor 993 may execute computer program code to implement each of steps T1 to 16 of Figure 4, or only step T3 in whole or in part, or only steps 11 and 12 of Figure 4.

The memory 994 stores data being read and written by the processor 993. As referred to herein, a processor may include one or more general-purpose processing devices such as a microprocessor, central processing unit, or the like. The processor may include a complex instruction set computing (CISC) microprocessor, reduced instruction set computing (RISC) microprocessor, very long instruction word (VLIW) microprocessor, or a processor implementing other instruction sets or processors implementing a combination of instruction sets. The processor may also include one or more special-purpose processing devices such as an application specific integrated circuit (ASIC), a field programmable gate array (FPGA), a digital signal processor (DSP), network processor, or the like. In one or more embodiments, a processor is configured to execute instructions for performing the operations and steps discussed herein.

The display unit 995 may display a representation of data stored by the computing device, for example accountable flags AF and/or challenges C, and may also display a cursor and dialog boxes and screens enabling interaction between a user and the programs and data stored on the computing device.

The input mechanisms 996 may enable a user to input data and instructions to the computing device, such as training data TD and/or input data ID.

The network interface (network I/F) 997 may be connected to a network, such as the Internet, and is connectable to other such computing devices via the network. The network I/F 997 may control data input/output from/to other apparatus via the network. Other peripheral devices such as microphone, speakers, printer, power supply unit, fan, case, scanner, trackerball etc may be included in the computing device.

Methods embodying the present invention may be carried out on a computing device such as that illustrated in Figure 8. Such a computing device need not have every component illustrated in Figure 8, and may be composed of a subset of those components. A method embodying the present invention may be carried out by a single computing device in communication with one or more data storage servers via a network. The computing device may be a data storage itself storing at least a portion of the data.

A method embodying the present invention may be carried out by a plurality of computing devices operating in cooperation with one another. One or more of the plurality of computing devices may be a data storage server storing at least a portion of the data.

Embodiments may be implemented in hardware, or as software modules running on one or more processors, or on a combination thereof. That is, those skilled in the art will appreciate that a microprocessor or digital signal processor (DSP) may be used in practice to implement some or all of the functionality described above.

The invention may also be embodied as one or more device or apparatus programs (e.g. computer programs and computer program products) for carrying out part or all of the methods described herein. Such programs embodying the present invention may be stored on computer-readable media, or could, for example, be in the form of one or more signals. Such signals may be data signals downloadable from an Internet website, or provided on a carrier signal, or in any other form.

The above-described embodiments of the present invention may advantageously be used independently of any other of the embodiments or in any feasible combination with one or more others of the embodiments.

## Claims

1. An inference verification method for verifying a trained first machine learning algorithm, the method comprising:

   inputting a set of data samples to each of a plurality of at least three different trained machine learning algorithms and obtaining a set of outcomes from each algorithm, where the plurality of trained machine learning algorithms are identical to the trained first machine learning algorithm except that each of the trained machine learning algorithms of the plurality has been trained using training data samples where at least some of the outcomes are different as compared to training data samples used to train the first machine learning algorithm; and
   for each sample in the data set input to the plurality of trained machine learning algorithms:

      determining whether all of the outcomes from the plurality of trained machine learning algorithms are the same; and
      when all of the outcomes from the plurality of trained machine learning algorithms are the same, reporting the first trained machine learning algorithm as being potentially defective for that sample in the input data set.

**2.** An inference verification method as claimed in claim 1, further comprising, when not all of the outcomes from the plurality of trained machine learning algorithms are the same, reporting the trained first machine learning algorithm as being non-defective for that sample in the input data set.

**3.** An inference verification method as claimed in claim 1 or 2, further comprising obtaining the plurality of different trained machine learning algorithms by:

creating a plurality of copies of the trained first machine learning algorithm, the trained first machine learning algorithm having been trained on a first set of training data samples; re-training each copy algorithm using respective sets of training data samples derived from the first set, each of the derived sets differing from each other, and differing from the first set in that labels attached to at least some features in the derived set are opposite to labels attached to those features in the first set.

**4.** An inference verification method as claimed in claim 1, 2 or 3, further comprising, when all of the outcomes from the plurality of trained machine learning algorithms are the same for the sample of data:

for each feature of the sample, assessing the overall contribution made by the feature to the outcomes obtained from all the trained machine learning algorithms of the plurality; on the basis of the assessment, determining at least one feature of the sample which made more overall contribution to the outcomes than the other features; and reporting the at least one feature.

**5.** An inference verification method as claimed in any preceding claim, further comprising, when not all of the outcomes from the plurality of trained machine learning algorithms are the same for the sample of data:

determining which of the plurality of trained machine learning algorithms provided an outcome which is a majority outcome and which of the plurality of trained machine learning algorithms provided an outcome which is a minority outcome; for each feature of the sample, assessing the difference between the overall contribution made by the feature in each trained machine learning algorithm which provided the majority outcome and the overall contribution made by the feature in each trained machine learning algorithm which provided the minority outcome; and

determining which of the differences is the largest and reporting the feature corresponding to the largest difference.

**6.** An inference verification method as claimed in claim 4 or 5, further comprising determining whether the reported feature has a preassigned special status and, if so, reporting that determination result.

**7.** An inference verification method as claimed in claim 6, wherein the preassigned special status indicates that the feature may be associated with at least one of:
susceptibility to undue bias, higher than average likelihood of false outcomes, higher than average likelihood of erroneous input values.

**8.** An inference verification method as claimed in any preceding claim, further comprising, when the trained first machine learning algorithm has been reported as being potentially defective for at least one sample in the input data set, causing the trained first machine learning algorithm to be retrained with a new set of training data samples.

**9.** Inference verification apparatus for verifying a trained first machine learning algorithm, the apparatus comprising:

at least one memory to store a plurality of at least three different trained machine learning algorithms, where the plurality of trained machine learning algorithms are identical to a trained first machine learning algorithm except that each of the trained machine learning algorithms of the plurality has been trained using training data samples where at least some of the outcomes are different as compared to training data samples used to train the first machine learning algorithm; at least one processor to receive a set of data samples, run the set of data samples on each of the plurality of different trained machine learning algorithms, and obtain a set of outcomes from each algorithm in response to the data samples; and an outcome determiner to determine, for each sample in the data set input to the plurality of trained machine learning algorithms, whether all of the outcomes from the plurality of trained machine learning algorithms are the same; wherein when all of the outcomes from the plurality of trained machine learning algorithms are the same, the outcome determiner reports the trained first machine learning algorithm as being potentially defective for that sample in the input data set.

10. Inference verification apparatus as claimed in claim 9, wherein, when not all of the outcomes from the plurality of trained machine learning algorithms are the same, the outcome determiner reports the trained first machine learning algorithm as being non-defective for that sample in the input data set.

11. Inference verification apparatus as claimed in claim 9 or 10, further comprising:

a duplicator to create a plurality of copies of the trained first machine learning algorithm, the trained first machine learning algorithm having been trained on a first set of training data samples; and

a trainer to re-train each copy algorithm using respective sets of training data samples derived from the first set, each of the derived sets differing from each other, and differing from the first set in that labels attached to at least some features in the derived set are opposite to labels attached to those features in the first set.

12. Inference verification apparatus as claimed in claim 9, 10 or 11, further comprising:

an assessor to assess, for each feature of the sample, the overall contribution made by the feature to the outcomes obtained from all the trained machine learning algorithms of the plurality, when all of the outcomes from the plurality of trained machine learning algorithms are the same for the sample of data; and

a contribution determiner to determine, on the basis of the assessment, at least one feature of the sample which made more overall contribution to the outcomes than the other features; wherein the apparatus reports the at least one feature.

13. Inference verification apparatus as claimed in any one of claims 9 to 12, further comprising:

a majority determiner to determine for the sample of data, when not all of the outcomes from the plurality of trained machine learning algorithms are the same, which of the plurality of trained machine learning algorithms provided an outcome which is a majority outcome and which of the plurality of trained machine learning algorithms provided an outcome which is a minority outcome; and

a difference assessor to determine, for each feature of the sample, the difference between the overall contribution made by the feature in each trained machine learning algorithm which provided the majority outcome and the overall contribution made by the feature in each trained machine learning algorithm which provided the minority outcome;

wherein the difference assessor further determines which of the differences is the largest and the apparatus reports the feature corresponding to the largest difference.

14. Inference verification apparatus as claimed in claim 12 or 13, wherein the apparatus determines whether the reported feature has a preassigned special status and, if so, reports that determination result.

15. An inference verification method as claimed in any one of claims 1 to 8 or inference verification apparatus as claimed in any one of claims 9 to 14, wherein the trained first machine learning algorithm is an autonomous information system.

**Amended claims in accordance with Rule 137(2) EPC.**

1. A computer-implemented inference verification method for verifying a first machine learning algorithm trained to make or support decisions in an engineering or manufacturing process, the method comprising:

inputting a set of data samples to each of a plurality of at least three different trained machine learning algorithms and obtaining a set of outcomes from each algorithm, where the plurality of trained machine learning algorithms are identical to the trained first machine learning algorithm except that each of the trained machine learning algorithms of the plurality has been trained using training data samples where at least some of the outcomes are different as compared to training data samples used to train the first machine learning algorithm (S1);

for each sample in the data set input to the plurality of trained machine learning algorithms:

determining whether all of the outcomes from the plurality of trained machine learning algorithms are the same (S2); and

when all of the outcomes from the plurality of trained machine learning algorithms are the same, reporting the first trained machine learning algorithm as being potentially defective for that sample in the input data set (s3); and

when the trained first machine learning algorithm has been reported as being potentially defective for at least one sample in the input data set, causing the first machine learning algorithm to be retrained with a new set of training data samples.

2. An inference verification method as claimed in claim 1, further comprising, when not all of the outcomes from the plurality of trained machine learning algorithms are the same, reporting the trained first machine learning algorithm as being non-defective for that sample in the input data set (S4).

3. An inference verification method as claimed in claim 1 or 2, further comprising obtaining the plurality of different trained machine learning algorithms by:

creating a plurality of copies of the trained first machine learning algorithm, the trained first machine learning algorithm having been trained on a first set of training data samples (S21); re-training each copy algorithm using respective sets of training data samples derived from the first set, each of the derived sets differing from each other, and differing from the first set in that labels attached to at least some features in the derived set are opposite to labels attached to those features in the first set (S22).

4. An inference verification method as claimed in claim 1, 2 or 3, further comprising, when all of the outcomes from the plurality of trained machine learning algorithms are the same for the sample of data:

for each feature of the sample, assessing the overall contribution made by the feature to the outcomes obtained from all the trained machine learning algorithms of the plurality (S6); on the basis of the assessment, determining at least one feature of the sample which made more overall contribution to the outcomes than the other features (S7); and reporting the at least one feature.

5. An inference verification method as claimed in any preceding claim, further comprising, when not all of the outcomes from the plurality of trained machine learning algorithms are the same for the sample of data:

determining which of the plurality of trained machine learning algorithms provided an outcome which is a majority outcome and which of the plurality of trained machine learning algorithms provided an outcome which is a minority outcome (S8); for each feature of the sample, assessing the difference between the overall contribution made by the feature in each trained machine learning algorithm which provided the majority outcome and the overall contribution made by the feature in each trained machine learning algorithm which provided the minority outcome (S9); and determining which of the differences is the largest and reporting the feature corresponding to the largest difference (S10).

6. An inference verification method as claimed in claim 4 or 5, further comprising determining whether the reported feature has a preassigned special status and, if so, reporting that determination result.

7. An inference verification method as claimed in claim 6, wherein the preassigned special status indicates that the feature may be associated with at least one of: susceptibility to undue bias, higher than average likelihood of false outcomes, higher than average likelihood of erroneous input values.

8. Inference verification apparatus (100) for verifying a first machine learning algorithm trained to make or support decisions in an engineering or manufacturing process, the apparatus comprising:

at least one memory (1) to store a plurality of at least three different trained machine learning algorithms, where the plurality of trained machine learning algorithms are identical to a trained first machine learning algorithm except that each of the trained machine learning algorithms of the plurality has been trained using training data samples where at least some of the outcomes are different as compared to training data samples used to train the first machine learning algorithm; at least one processor (2) to receive a set of data samples, run the set of data samples on each of the plurality of different trained machine learning algorithms, and obtain a set of outcomes from each algorithm in response to the data samples; and an outcome determiner (3) to determine, for each sample in the data set input to the plurality of trained machine learning algorithms, whether all of the outcomes from the plurality of trained machine learning algorithms are the same; wherein when all of the outcomes from the plurality of trained machine learning algorithms are the same, the outcome determiner reports the trained first machine learning algorithm as being potentially defective for that sample in the input data set, and the apparatus causes the trained first machine learning algorithm to be retrained with a new set of training data samples.

9. Inference verification apparatus as claimed in claim 8, wherein, when not all of the outcomes from the plurality of trained machine learning algorithms are the same, the outcome determiner (3) reports the trained first machine learning algorithm as being non-defective for that sample in the input data set.

10. Inference verification apparatus as claimed in claim 8 or 9, further comprising:

a duplicator (4) to create a plurality of copies of the trained first machine learning algorithm, the trained first machine learning algorithm having been trained on a first set of training data samples; and
a trainer (5) to re-train each copy algorithm using respective sets of training data samples derived from the first set, each of the derived sets differing from each other, and differing from the first set in that labels attached to at least some features in the derived set are opposite to labels attached to those features in the first set.

11. Inference verification apparatus as claimed in claim 8, 9 or 10, further comprising:

a contribution assessor (6) to assess, for each feature of the sample, the overall contribution made by the feature to the outcomes obtained from all the trained machine learning algorithms of the plurality, when all of the outcomes from the plurality of trained machine learning algorithms are the same for the sample of data; and
a contribution determiner (7) to determine, on the basis of the assessment, at least one feature of the sample which made more overall contribution to the outcomes than the other features; wherein the apparatus reports the at least one feature.

12. Inference verification apparatus as claimed in any one of claims 8 to 11, further comprising:

a majority determiner (8) to determine for the sample of data, when not all of the outcomes from the plurality of trained machine learning algorithms are the same, which of the plurality of trained machine learning algorithms provided an outcome which is a majority outcome and which of the plurality of trained machine learning algorithms provided an outcome which is a minority outcome; and
a difference assessor (9) to determine, for each feature of the sample, the difference between the overall contribution made by the feature in each trained machine learning algorithm which provided the majority outcome and the overall contribution made by the feature in each trained machine learning algorithm which provided the minority outcome; wherein the difference assessor (9) further determines which of the differences is the largest and the apparatus reports the feature corresponding to the largest difference.

13. Inference verification apparatus as claimed in claim 11 or 12, wherein the apparatus determines whether the reported feature has a preassigned special status and, if so, reports that determination result.

14. An inference verification method as claimed in any one of claims 1 to 7 or inference verification apparatus as claimed in any one of claims 8 to 13, wherein the trained first machine learning algorithm is an autonomous information system.

Figure 1A

S1 — Input data samples to *n* ML algorithms trained with different outcomes from algorithm under test and obtain outcomes

S2 — Outcomes for sample *i* from all *n* ML algorithms the same?

YES → S3 — Report trained ML algorithm under test as defective for that sample

NO → S4 — Report trained ML algorithm under test as non-defective for that sample

S8 — Determine which of the *n* ML algorithms provided majority outcomes and which provided minority outcomes

S9 — Assess for each feature of sample *i* the difference between overall contribution made by the feature in each algorithm of the majority and each algorithm of the minority

S10 — Determine largest difference and report corresponding feature

S5 — Outcomes for any sample not yet compared?

YES → (loop back)

NO → END

S6 — Assess for each feature of sample *i* overall contribution made by feature to outcomes of all *n* ML algorithms

S7 — Determine on basis of assessment at least one feature which made more overall contribution than the other features, and report that feature

A

```
┌─────────────────────────────┐
│ Create n copies of a trained ML │   S21
│ algorithm to be tested          │
└─────────────────────────────┘
              │
              ▼
┌─────────────────────────────┐
│ Re-train each copy algorithm    │
│ using respective training data  │
│ having altered outcomes with    │   S22
│ respect to data with which the  │
│ algorithm under test was trained│
└─────────────────────────────┘
              │
              ▼
┌─────────────────────────────┐
│ Output n retrained algorithms   │   S23
└─────────────────────────────┘
              │
              ▼
             ( A )
```

Figure 1B

Figure 2

Figure 3

## Training flow

```
            ┌──────────────┐
            │    Begin     │
            └──────────────┘
                   │
                   ▼
    ┌─────────────────────────────┐
    │ [T1] Train original model   │
    │ using training data         │
    └─────────────────────────────┘
                   │
                   ▼
    ┌─────────────────────────────┐
    │ [T2] Duplicate trained model│
    │ to n clones                 │
    └─────────────────────────────┘
                   │
                   ▼
    ┌─────────────────────────────┐
    │ [T3] Re-train every clone   │
    │ with sampled training data  │
    │ some of whose labels are    │
    │ flipped                     │
    └─────────────────────────────┘
                   │
                   ▼
            ┌──────────────┐
            │     End      │
            └──────────────┘
```

## Inference flow

```
            ┌──────────────┐
            │    Begin     │
            └──────────────┘
                   │
                   ▼
    ┌─────────────────────────────┐
    │ [I1] Supply input to every  │
    │ clone and obtain outcomes   │
    └─────────────────────────────┘
                   │
                   ▼
              ◇─────────◇
             ╱[I2] Do clones╲        Yes
            ◇ agree with     ◇─────────────┐
             ╲their outcomes?╱             │
              ◇─────────◇                  │
                   │ No                    │
                   ▼                       ▼
    ┌──────────────────────┐   ┌──────────────────────┐
    │ [I3] Report          │   │ [I4] Report          │
    │ "accountable" and    │   │ "unaccountable"      │
    │ voted output         │   │                      │
    └──────────────────────┘   └──────────────────────┘
                   │                       │
                   ▼                       ▼
    ┌──────────────────────┐   ┌──────────────────────┐
    │ [I5] Obtain          │   │ [I6] Report that a   │
    │ explanations from    │   │ feature's            │
    │ clones, evaluate and │   │ contribution is      │
    │ output challenge     │   │ biased if it is      │
    │                      │   │ common among clones  │
    └──────────────────────┘   └──────────────────────┘
                   │                       │
                   └───────────┬───────────┘
                               ▼
                       ┌──────────────┐
                       │     End      │
                       └──────────────┘
```

Figure 4

**Figure 5A**

| model1 | model2 | model3 | equal_decision | accountable | majority |
|---|---|---|---|---|---|
| 0 | 0 | 0 | 0 | False | accountable | 0 |
| 1 | 1 | 1 | 0 | False | accountable | 1 |
| 2 | 1 | 1 | 1 | True | unaccountable | 1 |
| 3 | 0 | 1 | 1 | False | accountable | 1 |
| 4 | 0 | 1 | 1 | False | accountable | 1 |

**Figure 5B**

Difference in decisions (count, accountable vs unaccountable)

**Figure 6A**

| | |
|---|---|
| creditamount | 1393 |
| duration | 12 |
| installmentrate | 4 |
| residencesince | 4 |
| age | 47 |
| existingcredits | 3 |
| peopleliable | 2 |
| existingchecking | A14 |
| credithistory | A32 |
| purpose | A46 |
| savings | A61 |
| employmentsince | A75 |
| statussex | A93 |
| otherdebtors | A101 |
| property | A122 |
| otherinstallmentplans | A141 |
| housing | A152 |
| job | A173 |
| telephone | A192 |
| foreignworker | A201 |
| Gender | Male |

**Figure 6B**

| | |
|---|---|
| existingchecking | 3.333333 |
| duration | 3.666667 |
| age | 7.000000 |
| statussex | 8.666667 |
| employmentsince | 9.000000 |
| job | 9.333333 |
| telephone | 10.000000 |
| creditamount | 10.666667 |
| existingcredits | 11.000000 |
| otherdebtors | 11.000000 |
| housing | 11.333333 |
| foreignworker | 11.666667 |
| residencesince | 12.000000 |
| Gender | 12.333333 |
| property | 12.666667 |
| installmentrate | 13.666667 |
| credithistory | 14.000000 |
| savings | 14.000000 |
| purpose | 14.666667 |
| otherinstallmentplans | 15.333333 |
| peopleliable | 15.666667 |

Figure 7A

Figure 7B

Figure 7C

**Figure 8**

PROCESSOR 993

MEMORY 994

992

DISPLAY 995

INPUT 996

NETWORK I/F 997

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/213503 A1 (NAVRATIL JIRI [US] ET AL) 11 July 2019 (2019-07-11) * abstract * * paragraph [0016] - paragraph [0069] * * figures 1-8 * ----- | 1-15 | INV. G06N20/20 |

TECHNICAL FIELDS
SEARCHED      (IPC)

G06N

The present search report has been drawn up for all claims

| Place of search | Date of completion of the search | Examiner |
|---|---|---|
| The Hague | 13 March 2020 | Appeltant, Lennert |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 3 809 341 A1**

## ANNEX TO THE EUROPEAN SEARCH REPORT
## ON EUROPEAN PATENT APPLICATION NO.

EP 19 20 4195

This annex lists the patent family members relating to the patent documents cited in the above-mentioned European search report.
The members are as contained in the European Patent Office EDP file on
The European Patent Office is in no way liable for these particulars which are merely given for the purpose of information.

13-03-2020

| Patent document cited in search report | Publication date | Patent family member(s) | Publication date |
|---|---|---|---|
| US 2019213503 A1 | 11-07-2019 | NONE | |

For more details about this annex : see Official Journal of the European Patent Office, No. 12/82

EPO FORM P0459

23